# EUROPÄISCHE PATENTSCHRIFT

(11) **EP 0 998 538 B1**
(45) Veröffentlichungstag und Bekanntmachung des Hinweises auf die Patenterteilung: **13.03.2002**
(21) Anmeldenummer: 98942521.0
(22) Anmeldetag: 07.07.1998
(51) Int. Cl.: C09K 3/10

(54) **HEISSHÄRTENDE WÄSCHEFESTE ROHBAU-VERSIEGELUNG**
HOT-SETTING WASH-FAST SEALANT FOR SHELL STRUCTURES
SCELLEMENT POUR GROS OEUVRE, LESSIVABLE ET THERMODURCISSABLE

(30) Priorität: 16.07.1997 DE 19730425
(43) Veröffentlichungstag der Anmeldung: 10.05.2000
(73) Patentinhaber: Henkel Teroson GmbH, 69123 Heidelberg (DE)
(72) Erfinder: BORN, Peter, D-69207 Sandhausen (DE); HÖLLRIEGEL, Klaus, D-69257 Wiesenbach (DE)
(74) Vertreter: Mathes, Nikolaus, Dr.
(86) Internationale Anmeldenummer: EP9804209
(87) Internationale Veröffentlichungsnummer: WO9903946

(56) Entgegenhaltungen:
- DE-A- 2 239 067
- DE-A- 4 122 849
- DE-A- 4 435 803
- DE-C- 3 834 818
- DATABASE WPI Section Ch, Week 8910 Derwent Publications Ltd., London, GB; Class A12, AN 89-071726 XP002084904 & JP 01 022948 A (NIPPON OIL SEAL IND CO LTD), 25. Januar 1989
- DATABASE WPI Section Ch, Week 9533 Derwent Publications Ltd., London, GB; Class A12, AN 95-252482 XP002084905 & JP 07 157735 A (TOYO INK MFG CO LTD) , 20. Juni 1995

## Beschreibung

Die Erfindung betrifft warmpumpbare, heißhärtende Massen auf der Basis von Ethylen-Vinylacetat-Copolymeren (EVA), deren Verwendung als Versiegelungsmassen oder Unterfütterungsklebstoff sowie ein Verfahren zum Versiegeln von Nähten im Fahrzeugbau und ein Verfahren zur Unterfütterung von Sandwich-Bauteilen im Fahrzeugbau.

Im Maschinen-, Fahrzeug- oder Gerätebau insbesondere im Automobilbau, werden die metallischen Komponenten im sogenannten Rohbau zum großen Teil noch mechanisch gefügt und befestigt. Zu den klassischen Befestigungsmethoden gehören Nieten. Schrauben oder Schweißen, insbesondere Punktschweißen sowie Verbördelungsverfahren. Die Nähte zwischen den so gefügten Bauteilen müssen dabei gegen eindringendes Wasser, Staub und dergleichen abgedichtet werden. Gängige Versiegelungsmassen zum Abdichten dieser Nähte sind entweder auf der Basis von Plastisolen oder auf der Basis von Kautschuk-Zusammensetzungen. Aus fertigungstechnischen Gründen werden diese Versiegelungen in der Automobilfertigung zunehmend im Rohbau vorgenommen, d.h. diese Versiegelungsmassen werden im allgemeinen auf die ungereinigte Metalloberfläche appliziert. Die Oberflächen sind häufig mit den verschiedenstens Korrosionsschutz- bzw. Ziehölen beschichtet, so daß die dort eingesetzten Versiegelungsmittel durch diese Öle nicht in ihrer Funktion beeinträchtigt werden dürfen. Die Aushärtung der Versiegelungsmittel erfolgt später in den Lacktrockenöfen. Vorher durchlaufen die gefügten und abgedichteten Teile Reinigungs-. Phosphatier- und Tauchgrundierstufen. Durch die in diesen Stufen verwendeten Behandlungsmittel können die Dichtmittel aus den Fugen gespült werden. Aus diesem Grunde müssen alle im Fahrzeugrohbau eingesetzten Dichtstoffe oder Versiegelungsmassen oder Klebstoffe eine sogenannte Wäscherfestigkeit besitzen. Um diesen Anforderungen gerecht zu werden, sind verschiedene Vorgehensweisen bekannt geworden, z.B. eine thermisch/induktive Vorhärtung oder Vorgelierung von niedrigviskosen, pastösen Kleb-/Dichtstoffen oder Versiegelungsmitteln auf Basis von Plastisolen. Diese Plastisole können dabei PVC-Plastisole sein. wie sie beispielsweise in der DE-A-1769325 oder der DE-A-2200022 beschrieben sind. es sind jedoch auch (Meth)acrylat-Plastisole zu verwenden, wie sie beispielsweise in der DE-A-2454235 oder der DE-A-3523480 genannt sind. Weitehin seien in diesem Zusammenhang die Plastisole auf Basis von Styrolcopolymeren erwähnt, die in der DE-A-4034725 bzw. der DE-A-4315191 offenbart sind. Zur Erzielung der bei der Verwendung von Plastisolen notwendigen Vorhärtung oder Vorgelierung sind separate Anlagenteile notwendig, in der Regel sind dies spezielle Induktionsheizgeräte oder Heißluft- oder IR-Strahler. Neben den zusätzlichen Investitionskosten hat diese Vorgehensweise einen weiteren Nachteil: Die Vorgelierung muß wegen der kurzen Fertigungstaktzeiten durch eine kurzfristige sehr hohe Temperaturbeaufschlagung erfolgen, so daß die Metallteile kurzfristig sehr hohe Oberflächentemperaturen erhalten. Dies kann zu einer Ölvercrackung der auf den Metalloberflächen befindlichen Korrosionsschutz- bzw. Tiefzieh-Fetten und Ölen führen.

Weiterhin sind Dicht- und Versiegelungsmittel auf der Basis von Kautschuken bekannt. die warm appliziert werden. Nach dem Abkühlen auf Umgebungstemperatur besitzen diese Mittel eine so hohe Eigenviskosität, so daß sie wenige Minuten nach dem Auftrag wäscherbeständig sind. Warm applizierbare Kautschuk-Zusammensetzungen werden sehr viel im Rohbau in der Automobilfertigung als Klebstoffe, Dichtstoffe und Versiegelungsmittel eingesetzt. Dabei enthalten diese Zusammensetzungen Kautschuke, insbesondere vulkanisierbare Kautschuke auf der Basis von 1.4-Polybutadienen und/oder 1,4-Polyisoprenen. Diese Zusammensetzungen enthalten vorzugsweise flüssige Polydiene niedrigen Molekulargewichts, Schwefel und ggf. Beschleuniger für die Schwefelvulkanisation. Zusätzlich können diese Zusammensetzungen hochmolekularen. sogenannten Festkautschuk enthalten, wobei sowohl die flüssigen Polydiene also auch der Festkautschuk funktionelle Gruppen wie z.B. Hydroxylgruppen, Carboxylgruppen. Anhydridgruppen oder Epoxygruppen enthalten können. Die Verwendung dieser Kautschuk-Zusammensetzungen als Kleb-/Dichtstoffe sind Gegenstand einer Reihe von Patentanmeldungen, beispielhaft erwähnt seien hier die EP-A-97394, EP-A-309903, EP-A-309904, DE-A-3834818, DE-A-4120502, DE-A-4122849 und EP-A-356715. Diese Kautschukzusammensetzungen besitzen jedoch vor der Aushärtung in den Lacktrockenöfen eine klebrige Oberfläche und sind durch mechanischen Druck sehr leicht deformierbar. Dies ist insbesondere bei deren Verwendung bei Anbauteilen wie z.B. Türen, Motorhauben oder Kofferraumdeckeln ein entscheidender Nachteil, da diese im Fertigungsprozeß häufig gestapelt und zwischengelagert werden müssen. Die klebrige Oberfläche bindet dabei sehr viel Staub und Schmutz, die leichte mechanische Deformierbarkeit führt insbesondere bei Nähten im Sichtbereich häufig zu Druckstellen von der Handhabung, so daß das optische Erscheinungsbild der abgedichteten Fuge nachteilig beeinflußt wird.

Einen Teil der oben geschilderten Probleme hat man dadurch versucht zu lösen, daß zweikomponentige Kautschuksysteme angewendet werden, so beschreibt die EP-A-181441 ein zweikomponentiges System bestehend aus einem hydroxyfunktionellen 1,3-Polybutadien und einer zweiten Komponente, die aus einem Polymer basierend auf 1,3-Butadien besteht und laterale Succinanhydridgruppen enthält. Die EP-A-356715 beschreibt ein zweikomponentiges System bestehend aus einem Polymer A, das mindestens 2 Hydroxylgruppen per Makromolekül enthält und einer zweiten Komponente, die verträglich ist mit Komponente A und die im Mittel mindestens 2 Carboxylgruppen oder Carbonsäureanhydridgruppen per Molekül enthält. Durch geeignete Katalysatoren können diese zweikomponentigen Materialien bei Raumtemperatur bereits über die Veresterungsreaktion eine gewisse Festigkeit erreichen. Die Endfestigkeit wird durch ein zusätzlich eingebautes Schwefelvulkanisationssystem bei der Vulkanisation in den Lacktrockenöfen erzielt. Eine ausreichende Druck- und Grifffestigkeit wird bei diesen zweikomponentigen Systemen jedoch erst etwa 30 Minuten nach Auftrag des Materials erreicht. Dies bedeutet, daß die entsprechenden Bauteile erst etwa 30 Minuten nach Materialauftrag weiter bearbeitet werden können. Außerdem benötigen zweikomponentige Systeme, insbesondere derartig hochviskose Systeme, aufwendige Dosier- und Mischapparaturen um eine einigerrnaßen verläßliche Prozeßsicherheit gewährleisten zu können.

Schmelzklebstoff-Zusammensetzungen gemäß herkömmlichen Stand der Technik würden zwar durch ihren raschen Festigkeitsaufbau nach Abkühlung eine rasche Druck- und Grifffestigkeit einer derartigen Versiegelung ermöglichen, diese Schmelzklebstoffe haben jedoch zwei entscheidende Nachteile:
- sie benötigen sehr hohe Auftragstemperaturen
- wegen ihres thermoplastischen Charakters erweichen und fließen sie bei den Temperaturen der Lacktrockenöfen, so daß sie aus dem Nahtbereich herausfließen würden.

Es bestand also die Aufgabe, warmpumpbare, in der Hitze härtende Zusammensetzungen bereitzustellen, die im Automobilbau in der Rohbauphase direkt auf die ungereinigten Blechoberfläche aufgetragen werden können und die bei der Verwendung als Versiegelungsmittel bereits sehr kurze Zeit nach dem Materialauftrag ausreichende Druck- und Grifffestigkeit besitzen, so daß die entsprechenden Bauteile sofort weiter bearbeitet werden können. Außerdem sollen diese Versiegelungsmittel eine klebfreie Oberfläche besitzen, damit sich auf diesen kein Staub oder Schmutz festsetzen kann. Außerdem gewährleistet eine klebfreie Oberfläche dieser Versiegelungsmittel, daß Anlagen- und Maschinenteile in denen derartig versiegelte Automobilbauteile weiter verarbeitet werden nicht durch diese Versiegelungsmittel kontaminiert werden. Außerdem soll das Bindemittelsystem so beschaffen sein, daß auch bei den breiten Temperaturspannen, die beim Einbrennen der Elektrotauchlackierung bei der Automobilfertigung die Härtung bzw. Vernetzung des Versiegelungsmittels stattfinden kann. Dabei muß gewärleistet sein, daß die gehärteten Versiegelungsmittel eine ansprechende glatte Oberfläche besitzen, da sich diese Nähte häufig im Sichtbereich befinden. Es dürfen aus Korrosionsschutzgründen keine Poren oder offenen Blasen auftreten. Weiterhin müssen diese Oberflächen durch die gängigen in der Automobilfertigung verwendeten Lacke überlackierfähig sein.

Die Lösung der Aufgabe ist den Patentansprüchen zu entnehmen. Sie beruht im wesentlichen auf der Verwendung von heißhärtenden Zusammensetzungen, die mindestens ein festes Ethylen-Vinylacetat-Copolymer (EVA-Copolymer) mit einem Erweichungspunkt über 50 °C, gemessen nach der Ring & Ball-Methode nach ASTM D28, mindestens einen flüssigen reaktiven Weichmacher mit olefinisch ungesättigten Doppelbindungen sowie mindestens ein peroxidisches Vernetzungsmittel enthalten.

Die Verwendung von Weichmachern in peroxidhaltigen Ethylen-Vinylacetat-Copolymer-Zusammensetzungen ist zwar im Prinzip bekannt, jedoch weisen die Hersteller von EVA-Copolymeren darauf hin, daß hierfür nur extrem gesättigte Produkte geeignet seien, da diese keinerlei Einfluß auf die Peroxid-Vulkanisation ausüben, Gemäß Herstellerangaben kommen als Weichmacher in erster Linie paraffinische Mineralöle mit sehr geringer Ungesättigkeit (olefinische Doppelbindungen) in Frage. Weiterhin werden konkret vorgeschlagen Adipat- und Sebacat-Weichmacher wie z.B. Adipinsäurebenzyloctylester (Adimoll BO) sowie Alkylsulphonsäureester des Phenols (Mesamoll).

Zur Erzielung des Schmelzklebstoff-ähnlichen Charakters enthalten die erfindunesgemäßen Versiegelungsmittel EVA-Copolymere die bei Raumtemperatur fest sind, d.h. sie müssen einen Erweichungspunkt von über 50 °C haben, wobei dieser Erweichungspunkt nach der Ring & Ball-Methode gemäß ASTM D28 gemessen wird. In den erfindungsgemäßen Versiegelungsmitteln werden die EVA-Copolymeren in Mengen von 4 bis 40 Gew.-% eingesetzt. bevorzugt werden 7 bis 33 Gew.-% Copolymer eingesetzt.

Um die Versiegelungsmittel mit den üblichen im Automobilbau eingesetzten Applikationsgeräten und erforderlichen Durchsatzraten warmverpumpbar zu machen, müssen die EVA-Copolymeren weichgemacht werden. Unter warmverpumpbar im Sinne der vorliegenden Erfindung soll verstanden werden, daß die Versiegelungsmittel bei Temperaturen zwischen 60 °C und 110 °C, vorzugsweise zwischen 70 °C und 100 °C eine ausreichend niedrige Viskosität besitzen, damit sie mit den üblichen Pumpen, Fördereinrichtungen und Applikationsgeräten verarbeitet werden können.

Als flüssige reaktive Weichmacher mit olefinisch ungesättigten Doppelbindungen können Flüssigkautschuke aus der folgenden Gruppe der Homo- und/oder Copolymeren ausgewählt werden:

Polybutadiene, insbesondere 1,4-, 1,3- und 1,2-Polybutadien. Polyisoprene, Styrol-Butadien-Copolymere. Butadienacrylnitril-Copolymere wobei vorzugsweise zumindest ein Teil dieser Polymeren endständige und/oder (statistisch verteilte) seitenständige fünktionelle Gruppen haben können. Beispiele für derartige Funktionelle Gruppen sind Hydroxy-, Carboxyl-, Carbonsäureanhydrid-, Epoxy- oder Aminogruppen. Das Molekulargewicht dieser flüssigen Dienhomo-und/oder Copolymeren ist typischerweise unterhalb von 20.000, vorzugsweise zwischen 1.000 und 10.000. Die Flüssigkautschuke sind in den erfindungsgemäßen Zusammensetzungen in Mengen von 5 bis 40 Gew.-% enthalten, vorzugsweise werden 14 bis 35 Gew.-% eingesetzt. Durch das Verhältnis von Flüssigkautschuken zu EVA-Copolymeren wird in hohem Maße die Rheologie der Gesamtzusammensetzung beeinflußt, so daß durch das entsprechende Verhältnis das Fließverhalten der Zusammensetzunge in weiten Grenzen eingestellt werden kann. Dadurch können sowohl extrudierbare als auch spritzbare Versiegeiungsmassen hergestellt werden.

Zusätzlich zu den vorgenannten Polydienen können noch weitere Verbindungen mit olefinisch ungesättigten Doppelbindungen mitverwendet werden, hierzu zählen insbesondere die hoch siedenden (Meth)-acrylsäureester, insbesondere Pentyl(meth)acrylat, Isoamyl(meth)acrylat, Hexyl(meth)acrylat. Cyclohexyl(meth)acrylat, 2-Ethylhexyl(meth)-acrylat sowie die entsprechenden Octyl-, 3,5,5-Trimethylhexyl-, Decyl-, Dodecyl-, Hexadecyl-, Octadecyl-, Octadecenyl-(meth)acrylate sowie die entsprechenden Ester der Malein-, Fumar-, Tetrahydrophthal-, Croton-, Isocroton-, Vinylessig- und Itaconsäure. Bevorzugt eingesetzt werden können (Meth)acrylate mit mehr als einer Doppelbindung pro Molekül, z.B. Ethylenglykoldi(meth)acrylat, Diethylenglykoldi(meth)acrylat, Propylenglykoldi(meth)acrylat, Trimethylenglykoldi(meth)acrylat, Neopentylglykoldi(meth)acrylat, 1,3-Butylenglykoldi(meth)acrylat, 1,4-Butylenglykoldi(meth)acrylat, 1,6-Hexamethylenglykoldi(meth)acrylat, 1,10-Decamethylenglykoldi(meth)acrylat. Trimethylolpropantri(meth)acrylat, Pentaerythrittetra(meth)acrylat oder Pentaerythrittri(meth)acrylat. Weiterhin sind die Acrylsäure- und Methacrylsäuresalze von zweiwertigen Metallen geeignet. Beispielhaft erwähnt seien hier die entsprechenden Zinkdiacrylate und Zinkdimethacrylate. Die vorgenannten reaktiven (Meth)acrylat-Verbindungen werden in Mengen von 1 bis 10 Gew.-% eingesetzt, vorzugsweise werden 3 bis 6 Gew.-% verwendet.

Als Auswahlkriterium für die peroxidischen Vernetzungsmittel sind die folgenden Faktoren wichtig:
- Die Peroxide müssen unter Pumpbedingungen d.h. im Temperaturbereich zwischen etwa 70 und 120 ° C eine ausreichende Stabilität besitzen, so daß bei diesen Temperaturen und Applikationsbedingungen noch keine nennenswerte Härtungsreaktion stattfindet,
- bei den Temperaturen des Einbrennofens für die Elektrotauchlackierung, d.h. bei Temperaturen zwischen 160 und 240 ° C muß die Zerfallsgeschwindigkeit der Peroxide hinreichend schnell sein um innerhalb von 15 bis 30 Minuten (Verweildauer im Lackofen) eine Vernetzung des Versiegelungsmittels zu gewährleisten.
   Beispiel für geeignete Peroxide sind: tert-Butyl-cumyl-peroxid. Di(2-tert-butylperoxypropyl)-(2)-benzol, Dicumyl-peroxid, Ethyl-3,3-di(tert-butylperoxy)-butyrat, n-Butyl-4,4'-di(tertbutyl-peroxy)-valerat, tert-Butyl-peroxybenzoat, tert-Butyl-hydroperoxid, Cumolhydroperoxid, 1,1,3,3-Tetramethylbutylhydroperoxid, sowie 2,5-Dimethyl-2,5 di(tert-butyl-peroxy-hexin)-3.

Die Menge der eingesetzten Peroxide richtet sich nach den oben genannten Kriterien, sie werden in 0.1 bis 5 Gew.-%, vorzugsweise 0,5 bis 1.5 Gew.-% verwendet.

Weiterhin können die erfindungsgemäßen Zusammensetzungen sogenannte Kicker oder Aktivatoren enthalten, die die peroxidische Vernetzung beschleunigen, beispielhaft erwähnt seien hier aromatische Amine sowie Metalloxide wie z.B. Zinkoxid. Wenn Aktivatoren eingesetzt werden, so werden sie in Mengen bis zu 6 Gew.-%. vorzugsweise 2 bis 4 Gew.-% verwendet.

Gegen den thermischen, thermooxidativen, Ozon- oder hydrolytischen Abbau der erfindungsgemäßen Zusammensetzungen können konventionelle Stabilisatoren eingesetzt werden. Hierzu zählen z.B. die sterisch gehinderten Phenole oder Aminderivate oder auch insbesondere Carbodiimid-Stabilisatoren, oder Polycarbodiimid-Derivate wobei die letztgenannten vorzugsweise als Masterbatch in einem EVA-Copolymer eingesetzt werden. Die vorgenannten Stabilisatoren werden in Mengen bis zu 5 Gew.-%. vorzugsweise zwischen 1 und 3 Gew.-% verwendet.

Die Füllstoffe können aus einer Vielzahl von Materialien ausgewählt werden. insbesondere sind hier zu nennen Kreiden, natürliche oder gemahlene Calciumcarbonate. Silikate, hier insbesondere die Aluminiumsilikate oder Magnesiumaluminiumsilikate oder Magnesiumalkalialuminiumsilikate oder auch Talkum oder Graphit oder Ruß. Die Menge der eingesetzten Füllstoffe kann in weiten Grenzen variieren, typische Bereiche liegen zwischen 20 und 70 Gew.-%, vorzugsweise werden zwischen 40 und 50 Gew.-% Füllstoffe verwendet. Zur Herstellung von spezifisch leichten Versiegelungsmaterialien können die Füllstoffe auch anteilig durch Kunststoff-Mikrohohlkugeln ersetzt werden. wobei diese Mikrohohlkugeln entweder in der vorexpandierten Form eingesetzt werden können oder aber in der kompakten Form, die erst während der Aushärtung des Versiegelungsmittels im Lacktrockenofen expandieren. Derartige Mikrohohlkugeln sind beispielsweise in der EP-A-586541 oder der US-A-4829094 offenbart.

Weiterhin können die erfindungsgemäßen Zusammensetzungen Farbpigmente wie z.B. Titandioxid, Eisenoxide oder Farbruße enthalten. Die vorgenannten Pigmente werden in Mengen bis zu 5 Gew.-%, vorzugsweise zwischen 1 und 3 Gew.,-% in der Formulierung verwendet. Zur Verminderung der Feuchtigkeitsempfindlichkeit kann es zweckmäßig sein, wasserbindende Mittel wie insbesondere Caiciumoxid in Mengen zwischen 1 und 10 Gew.-% in die Formulierungen einzuarbeiten. Vorzugsweise werden zwischen 3 und 5 Gew.-% Calciumoxid eingesetzt.

Zur Verbesserung der Beschichtbarkeit der Versiegelungsmittel mit elektrophoretisch abgeschiedenen Lacken können die Zusammensetzungen in an sich bekannter Weise Graphit enthalten, hierzu können 5 bis 15 Gew.-% Graphit, bevorzugt 25 bis 35 Gew.-% Graphit an die Stelle der vorgenannten Füllstoffe und Pigmente treten.

Bei der Verwendung der erfindungsgemäßen Zusammensetzungen als Unterfütterungsklebstoff zur Unterfütterung von Sandwich-Bauteilen enthalten diese Zusammensetzungen noch an sich bekannte Treibmittel aus der Klasse der Azoverbindungen, N-Nitrosoverbindungen, Sulphonylhydrazide oder Sulphonylsemicarbazide. Für die erfindungsgemäß zu verwendenden Azoverbindungen seien beispielhaft das Azobisisobutyronitril und insbesondere das Azodicarbonamid genannt. Aus der Klasse der Nitrosoverbindungen sei beispielhaft das Di-nitrosopentamethylentetramin genannt. aus der Klasse der Sulphohydrazide das 4,4'-Oxibis(benzolsulphonsäurehydrazid) das Diphenylsulphon-3,3'-Disulphohydrazid oder das Benzol-1,3-Disolphohydrazid, aus der Klasse der Semicarbazide sei das p-Toluolsulphonylsemicarbazid genannt. Anstelle der vorgenannten Treibmittel können jedoch auch die nicht expandierten Mikrohohlkugeln treten, die bekanntlich in ihrer nicht expandierten Form thermoplastische Polymerpulver darstellen, die mit niedrigsiedenden organischen Flüssigkeiten getränkt bzw, gefüllt sind. Zum Einsatz als Unterfütterungsklebstoff sollen diese Zusammensetzungen während der Härtung um etwa 20 % bis etwa 250 % in ihrem Volumen expandieren. Einsatzbereiche für derartige Unterfütterungsklebstoffe sind die folgenden Sandwich-Strukturen im Automobilbau: Dachspriegel mit Dachaußenhaut, Motorhaube bzw. Kofferraumdeckel mit Verstärkungsrahmen, Stahlschiebedachdeckel mit Verstärkungsrahmen, Innenblech mit Außenblech bei Türkonstruktionen, Fensterschachtverstärkung mit Türaußenblech. Sideimpact-Crash-Leiste gegen Türaußenblech. Die Expansion des Unterfütterungsklebstoffes stellt sicher, daß trotz der thermischen Ausdehnung der Bleche oder bei der Blechbewegung, die durch die Erwärmung im Lacktrockenofen hervorgerufen wird. sowie trotz der Fertigungstoleranzen die Benetzung des zweiten Substrats mit dem Unterfütterungsklebstoff sichergestellt wird. Die vorgenannten Treibmittel werden bis zu 3 Gew.-%, bevorzugt zwischen 0,5 und 1,5 Gew.-% eingesetzt.

Je nach zu versiegelndem Substrat kann es notwendig sein, an sich bekannte haftvermittelnde Substanzen oder klebrigmachende Harze in der erfindungsgemäßen Zusammensetzung mitzuverwenden. Geeignete Haftvermittler bzw. Klebrigmacher sind beispielsweise in der DE-A-19644855 auf S. 8/9 genannt. Diese können in Mengen bis zu 10 Gew.-%, vorzugsweise zwischen 3 und 5 Gew.-% mitverwendet werden.

In den nachfolgenden Ausführungsbeispielen soll die Erfindung näher erläutert werden. wobei die Auswahl der Beispiele keine Beschränkung des Umfanges des Erfindungsgegenstandes darstellen soll.

In einem evakuierbaren Laborkneter wurden die nachfolgend aufgeführten Zusammensetzungen solange gemischt, bis sie homogen waren. Falls nicht anders angegeben, sind alle Teile in den Beispielen Gewichtsteile.

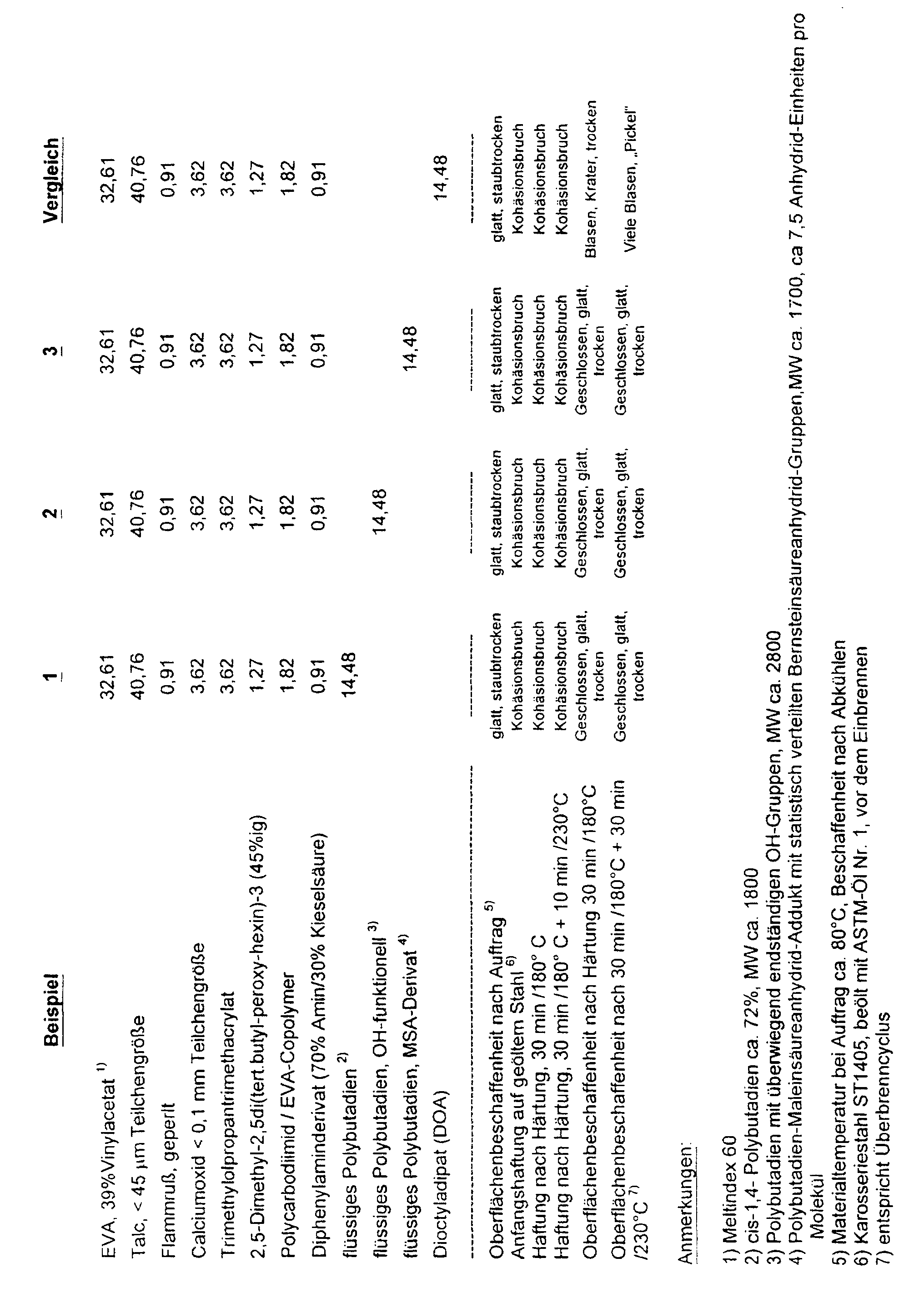

### Beispiel 4

Dies ist ein Beispiel für einen expandierenden Unterfütterungs-Klebstoff

| | |
|---|---|
| EVA, 39%Vinylacetat ¹⁾ | 22.61 |
| Talc, < 45 µm Teilchengröße | 43,17 |
| Flammruß, geperlt | 0,91 |
| Calciumoxid < 0,1 mm Teilchengröße | 3,62 |
| Trimethylolpropantrimethacrylat | 3.62 |
| 2,5-Dimethyl-2,5di(tert.butyl-peroxy-hexin)-3 (45%ig) | 1,27 |
| Polycarbodiimid / EVA-Copolymer | 0.91 |
| Diphenylaminderivat (70% Amin/30% Kieselsäure) | 0,91 |
| Zinkoxid | 3,00 |
| Azodicarbonamid | 0,50 |
| flüssiges Polybutadien, MSA-Derivat²⁾ | 19,48 |

| | |
|---|---|
| Anmerkungen: 1) Meltindex 60 | |
| 2) Polybutadien-Maleinsäureanhydrid-Addukt mit statistisch verteilten Bemsteinsäureanhydrid-Gruppen,MW ca. 1700, ca. 15 Anhydrid-Einheiten pro Molekül | |

Die nachfolgenden Beispiele wurden in analoger Weise zu den Beispielen 1 bis 3 hergestellt. Ihr wesentlicher Unterschied zu den vorgenannten Beispielen ist die Viskosität. Es handelt sich hierbei um niedrigviskose Zusammensetzungen, die zum Versiegeln von Nähten geeignet sind und daher spritzbar sind.

| **Beispiel** | **5** | **6** |
|---|---|---|
| EVA, 39%Vinylacetat ¹⁾ | 7,61 | 17,51 |
| Talc, < 45 um Teilchengröße | 46,62 | 47,60 |
| Flammruß, geperlt | 0,91 | 0,91 |
| Calciumoxid < 0,1 mm Teilchengröße | 4,92 | 3,60 |
| Trimethylolpropantrimethacrylat | 3,62 | 3,60 |
| 2,5-Dimethyl-2,5di(tert.butyl-peroxy-hexin)-3 (45%ig) | 0,50 | 0,60 |
| Polycarbodiimid / EVA-Copolymer | 0,91 | 0,91 |
| Diphenylaminderivat (70% Amin/30% Kieselsäure) | 0,91 | 0,91 |
| flüssiges Polybutadien ²⁾ | 17,00 | 12,00 |
| flüssiges Polybutadien, MSA-Derivat ⁴⁾ | 17,00 | 12,36 |
| Oberflächenbeschaffenheit nach Auftrag⁵⁾ | glatt, trocken | glatt, trocken |
| Anfangshaftung auf geöltem Stahl ⁶⁾ | Kohäsionsbruch | Kohäsionsbruch |
| Haftung nach Härtung, 30 min /180° C | Kohäsionsbruch | Kohäsionsbruch |
| Haftung nach Härtung, 30 min /180° C + 10 min /230° | Kohäsionsbruch | Kohäsionsbruch |
| Oberflächenbeschaffenheit nach Härtung 30 min /180°C | Geschlossen, glatt, trocken | Geschlossen. glatt, trocken |
| Oberflächenbeschaffenheit nach 30 min /180°C + 30 min /230°C ⁷⁾ | Geschlossen, glatt, trocken | Geschlossen, glatt, trocken |

| | | |
|---|---|---|
| Anmerkungen: 1) Meltindex 60 | | |
| 2) cis-1,4- Polybutadien ca. 72%, MW ca. 1800 3) Polybutadien mit überwiegend endständigen OH-Gruppen. MW ca. 2800 | | |
| 4) Polybutadien-Maleinsäureanhydrid-Addukt mit statistisch verteilten Bemsteinsäureanhydrid-Gruppen.MW ca. 1700, ca 7.5 Anhydrid-Einheiten pro Molekül | | |
| 5) Materialtemperatur bei Auftrag ca. 80°C, Beschaffenheit nach Abkühlen | | |
| 6) Karosseriestahl ST1405, beölt mit ASTM-Öl Nr. 1, vor dem Einbrennen | | |
| 7) entspricht Überbrenncyclus | | |

Die Beispiele 1 bis 3 sind erfindungsgemäß Formulierungen für ein Versiegelungsmittel. Zum Vergleich wurde ein ähnliches Versiegelungsmittel hergestellt, das anstelle der flüssigen Polybutadiene Dioctyladipat enthält. Letzteres wird von den Herstellern von EVA-Copolymeren als besonders geeigneter Weichmacher empfohlen. Wie aus den Versuchsergebnissen zu ersehen ist, haben nach dem Einbrennen nur die erfindungsgemäßen Versiegelungsmittel eine brauchbare Oberflächenbeschaffenheit, wie sie insbsondere für zu versiegelnde Nähte im Sichtbereich zu fordern sind. Das Vergleichsbeispiel wurde nach den Informationen gemäß Stand der Technik, d.h. mit einem Weichmacher ohne ungesättigte Bestandteile hergestellt. Bei diesem Versiegelungsmittel ist die Oberflächenbeschaffenheit nach der Härtung völlig unbefriedigend und damit unbrauchbar, dies trifft insbesondere für die Proben zu, die einem sogenannten Überbrennzyklus unterworfen wurden. Dieser Überbrennzyklus simuliert die maximal auftretende Temperatur im Lacktrockenofen für die Elektrotauchlackierung.

Das Beispiel 4 ist ein erfindungsgemäßes Beispiel für einen expandierenden Unterfütterungs-Klebstoff. Wegen der expandierenden Eigenschaften hat dieser Klebstoff im ausgehärteten Zustand natürlich im Inneren eine Porenstruktur, so daß er als Versiegelungsmittel nur bedingt einsetzbar ist.

Die Beispiele 5 und 6 sind erfindungsgemäße Beispiele für ein niederviskoses spritzbares Versiegelungsmittel. Auch aus diesen Versuchsergebnissen wird deutlich, daß spritzbare erfindungsgemäße Versiegelungsmittel eine gut brauchbare Oberflächenbeschaffenheit für zu versiegelnde Nähte im Sichtbereich haben.

## Patentansprüche

1. Warm pumpbare, heißhärtende Massen auf Basis von Ethylen-vinylacetat-Copolymeren (EVA) **dadurch gekennzeichnet, daß** sie
a) mindestens ein festes EVA-Copolymer mit einem Erweichungspunkt über 50 °C, gemessen nach der Ring & Ball-Methode nach ASTM D 28.
b) mindestens einen flüssigen reaktiven Weichmacher mit olefinisch ungesättigten Doppelbindungen und
c) mindestens ein peroxidisches Vernetzungsmittel enthalten.

2. Heißhärtende Massen gemäß Anspruch 1, **dadurch gekennzeichnet, daß** als flüssige reaktive Weichmacher die bei Raumtemperatur flüssigen Butadien- und/oder Isoprenhomo- und/oder Copolymeren mit einem Molekulargewichtsbereich von 1000 bis 20000 verwendet werden.

3. Heißhärtende Massen gemäß Anspruch 2. **dadurch gekennzeichnet, daß** mindestens ein flüssiges Dien-Copolymer funktionelle Gruppen ausgewählt aus der Gruppe Hydroxi-, Amino-, Epoxy-, Carboxy-, Carbonsäureanhydrid-Gruppe enthält.

4. Heißhärtende Massen gemäß mindestens einem der vorhergehenden Ansprüche, **dadurch gekennzeichnet, daß** sie zusätzlich bei Raumtemperatur flüssige und/oder feste (Meth)acrylat Monomere enthalten.

5. Heißhärtende Massen gemäß mindestens einem der vorhergehenden Ansprüche, **dadurch gekennzeichnet, daß** sie zusätzlich mindestens ein Hilfs- und/oder Zusatzmittel aus der Gruppe der Stabilisatoren. Aktivatoren für Peroxide ("Kicker"), Füllstoffe, Farbpigmente, Trockenmittel, Treibmittel enthalten.

6. Verwendung der heißhärtenden Massen gemäß einem der vorhergehenden Ansprüche zur Versiegelung von Fein- und Grobnähten im Fahrzeugbau.

7. Verwendung der heißhärtenden Massen gemäß mindestens einem der vorhergehenden Ansprüche als Unterfütterungsklebstoff.

8. Verfahren zur Versiegelung von Grob und/oder Feinnähten im Fahrzeugrohbau **gekennzeichnet durch** die folgenden Verfahrensschritte
a) Fügen der Rohbauteile, gegebenenfalls gefolgt vom (Punkt-)schweißen, Bördeln, Schrauben und/oder Nieten.
b) Applizieren der Zusammensetzung gemäß Anspruch 1 bis 5 auf mindestens ein Rohbauteil, wobei die Versiegelungsmasse eine Temperatur von 60 °C bis 110°C hat,
c) ggf. Reinigen/Waschen der gefügten Rohbauteile ggf. gefolgt von üblichen Oberflächenvorbehandlungen,
d) Elektrotauchlackierung,
e) Härten und/oder Vernetzen der Versiegelungsmasse während des Einbrennens der Elektrotauchlackierung bei Temperaturen zwischen 160 °C und 240 °C.

9. Verfahren zur Unterfütterung von Sandwich-Bauteilen im Fahrzeugbau **gekennzeichnet durch** die folgenden Verfahrensschritte
a) Applizieren der Zusammensetzung gemäß Anspruch 1 bis 5 auf mindestens ein Rohbauteil, wobei der Unterfütterungsklebstoff ein Treibmittel enthält und eine Temperatur von 60 °C bis 110°C hat.
b) Fügen der Rohbauteile, gegebenenfalls gefolgt vom (Punkt-)schweißen, Bördeln. Schrauben und/oder Nieten,
c) ggf. Reinigen/Waschen der gefügten Rohbauteile ggf. gefolgt von üblichen Oberflächenvorbehandlungen,
d) Elektrotauchlackierung,
e) Härten und/oder Vernetzen des Unterfütterungsklebstoffes während des Einbrennens der Elektrotauchlackierung bei Temperaturen zwischen 160 °C und 240 °C, wobei der Klebstoff um 20 bis 250 % expandiert.

## Revendications

1. Masses thermodurcissables et pompables à chaud, à base de copolymères éthylène-acétate de vinyle (EVA),
**caractérisées en ce qu'**
elles contiennent
a) au moins un copolymère (EVA) solide ayant un point de ramolissement supérieur à 50°C, mesuré selon le procédé bille et anneau conforme au procédé ASTM D28,
b) au moins un plastifiant réactif liquide avec doubles liaisons oléfiniquement insaturées et
c) au moins un agent réticulant peroxydique.

2. Masses thermodurcissables selon la revendication 1,
**caractérisées en ce que**
comme plastifiant réactif liquide on utilise les homo- et/ou copolymères de butadiène et/ou d'isoprène liquides à la température ambiante ayant un intervalle de poids moléculaire allant de 1000 à 20 000.

3. Masses thermodurcissables selon la revendication 2,
**caractérisées en ce qu'**
au moins un copolymère de diène liquide contient des groupes fonctionnels choisis dans le groupe hydroxy, amino, époxy, carboxy, anhydride d'acide carboxylique.

4. Masses thermodurcissables selon au moins l'une des revendications précédentes,
**caractérisées en ce qu'**
elles contiennent en outre des monomères de (méth)acrylates liquides et/ou solides à la température ambiante.

5. Masses thermodurcissables selon au moins l'une des revendications précédentes,
**caractérisées en ce qu'**
elles contiennent en outre au moins un adjuvant et/ou un additif du groupe des stabilisateurs, des activateurs pour peroxydes ("kickers"), des charges, des colorants, des desséchants et des diluants.

6. Utilisation des masses thermodurcissable selon l'une des revendications précédentes pour le scellement des joints fins et grossiers dans la construction automobile.

7. Utilisation des masses thermodurcissable selon au moins une des revendications précédentes comme adhésif de calfeutrage.

8. Procédé de scellement de joints grossiers et/ou fins dans le gros oeuvre de la construction automobile,
**caractérisé par** les étapes opératoires suivantes :
a) jonction des pièces brutes, suivi le cas échéant par un soudage par points, la formation de rebords, le vissage et/ou le rivetage.
b) application de la composition selon l'une des revendications 1 à 5 sur au moins une pièce brute, la masse de scellement ayant une température de 60°C à 110°C,
c) le cas échéant nettoyage/lavage des pièces brutes jointes, le cas échéant suivi par des prétraitements de surface habituels,
d) revêtement par trempage électrophorétique,
e) durcissement et/ou réticulation de la masse de scellement au cours de la combustion du laquage au bain électrolytique, à des températures comprises entre 160°C et 240°C.

9. Procédé de jonction de pièces en sandwich dans les véhicules automobiles,
**caractérisé par** les étapes opératoires suivantes :
a) application de la composition selon l'une des revendications 1 à 5 sur au moins une pièce brute, l'adhésif de calfeutrage contenant un agent d'expansion et ayant une température de 60°C à 110°C,
b) jonction des pièces brutes, le cas échéant suivie par un soudage (par points), la formation de rebord, un vissage et/ou un rivetage,
c) le cas échéant nettoyage/lavage des pieces brutes jointes, le cas échéant suivi par des prétraitements de surface habituels,
d) revëtement par trempage électrophorétique,
e) durcissement et/ou réticulation de l'adhésif de calfeutrage au cours de la combustion du laquage au bain électrolytique, à des températures comprises entre 160°C et 240°C, l'adhésif s'expansant de 20 à 250 %.

## Claims

1. Hot-pumpable, heat-curing compositions based on ethylene/vinyl acetate copolymers (EVA), **characterized in that** they contain
a) at least one solid EVA copolymer with a softening point above 50°C, as measured by ring and ball method according to ASTM-D-28,
b) at least one liquid reactive plasticizer containing olefinically unsaturated double bonds and
c) at least one peroxidic crosslinking agent.

2. Heat-curing compositions as claimed in claim 1, **characterized in that** butadiene and/or isoprene homopolymers and/or copolymers liquid at room temperature with a molecular weight in the range from 1,000 to 20,000 are used as the liquid reactive plasticizer.

3. Heat-curing compositions as claimed in claim 2, **characterized in that** at least one liquid diene copolymer contains functional groups selected from hydroxy, amino, epoxy, carboxy and carboxylic anhydride groups.

4. Heat-curing compositions as claimed in at least one of the preceding claims, **characterized in that** they additionally contain (meth)acrylate monomers liquid and/or solid at room temperature.

5. Heat-curing compositions as claimed in at least one of the preceding claims, **characterized in that** they additionally at least one auxiliary and/or additive from the group of stabilizers, activators for peroxides ("kickers"), fillers, pigments, drying agents and expanding agents.

6. The use of the heat-curing compositions claimed in any of the preceding claims for sealing fine and rough seams in vehicle manufacture.

7. The use of the heat-curing compositions claimed in at least one of the preceding claims as a lining adhesive.

8. A process for sealing rough and/or fine seams at the white-shell stage of car manufacture, **characterized by** the following steps:
a) assembling the parts, optionally following (spot) welding, flanging, screwing and/or riveting,
b) applying the composition claimed in claims 1 to 5 to at least one part, the sealing composition having a temperature of 60°C to 110°C and preferably in the range from 70°C to 100°C.
c) optionally cleaning/washing the assembled parts, optionally followed by typical surface pretreatments,
d) electrophoretic coating,
e) curing and/or crosslinking the sealing composition during stoving of the paint applied by electrophoretic deposition at temperatures of 160°C to 240°C.

9. A process for lining sandwich parts in car manufacture, **characterized by** the following steps:
a) applying the composition claimed in claims 1 to 5 to at least one part, the lining adhesive containing an expanding agent and having a temperature of 60°C to 110°C and preferably in the range from 70°C to 100°C,
b) assembling the parts, optionally followed by (spot) welding, flanging, screwing and/or riveting,
c) optionally cleaning/washing the joined parts, optionally following by typical surface pretreatments,
d) electrophoretic coating,
e) curing and/or crosslinking the lining adhesive during stoving of the paint applied by electrophoretic deposition at temperatures of 160°C to 240°C, the adhesive expanding by 20 to 250%.
